# EUROPEAN PATENT SPECIFICATION

(11) **EP 2 434 758 B1**
(45) Date of publication and mention of the grant of the patent: **28.06.2017**
(21) Application number: 09846055.3
(22) Date of filing: 18.12.2009
(51) Int. Cl.: H04N 7/18, H04L 12/24, H04L 29/06, G08B 13/196, H04L 29/08

(54) **DISTRIBUTED NODE VIDEO MONITORING SYSTEM AND MANAGEMENT METHOD THEREOF**
VIDEOÜBERWACHUNGSSYSTEM MIT VERTEILTEN KNOTEN UND VERWALTUNGSVERFAHREN DAFÜR
SYSTÈME DE SURVEILLANCE VIDÉO À N UDS RÉPARTIS ET SON PROCÉDÉ DE GESTION

(30) Priority: 19.06.2009 CN 200910108208
(43) Date of publication of application: 28.03.2012
(73) Proprietor: ZTE Corporation, Shenzhen, Guangdong 518057 (CN)
(72) Inventor: FENG, Yanqing, Shenzhen Guangdong 518057 (CN); YU, Tao, Shenzhen Guangdong 518057 (CN)
(74) Representative: Page Hargrave
(86) International application number: PCT/CN2009/075725
(87) International publication number: WO 2010/145141

(56) References cited:
- CN-A- 1 761 320
- CN-A- 1 972 311
- CN-A- 101 600 098
- US-A1- 2003 101 253
- US-A1- 2004 028 391
- US-A1- 2007 192 464
- US-A1- 2009 113 253

## Description

### Technical Field

The present invention relates to a distributed node video surveillance system and a management method thereof.

### Background of the Related Art

The network video surveillance service is a value-added service based on surveillance, transmission, storage and management of the remote image of the broadband network. This service networks the dispersive and independent image acquisition points using the broadband network to achieve unified monitoring, unified storage, unified management and resource sharing across regions within a full range. The network video surveillance system meets the demands for public monitoring and professional monitoring simultaneously, and is independent networking, and not only may carry out the video monitoring service on the mobile streaming media, but also may carry out the video monitoring service on the interactive Internet Protocol TV (IPTV) network.

Existing video surveillance system generally comprises a plurality of subsystems, and if the cooperative work among various subsystems is not ideal, large capacity Pre Unit (PU) access, media forwarding, client access and video recording storage cannot be supported. Therefore, there is a need to design new video surveillance architecture to solve the problem of the cooperative work among various subsystems.

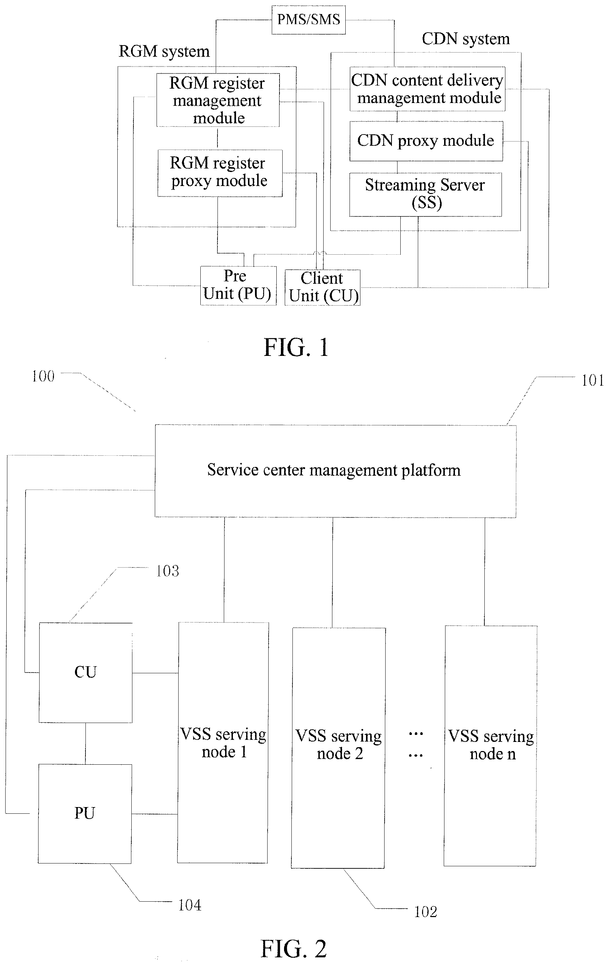

The existing video surveillance service system often uses a single node structure. As shown in the structural schematic diagram of the single node video surveillance system in FIG. 1, the single node video surveillance system comprises: a Portal Manager System (PMS)/Streaming Management System (SMS), a Register Manager (RGM) System which includes a RGM register management module and a RGM register proxy module, and a Content Delivery Network (CDN) system which includes a CDN content delivery management module, a CDN proxy module and a Streaming Server (SS). The RGM system and the CDN system are typically installed on the same device, but still use the centralized processing mode in terms of data processing.

As shown in FIG. 1, the video surveillance system using this centralized structure mainly has the following obvious drawbacks:
1. The RGM module centralizes too much service processing, which easily becomes a performance bottleneck of the system.
2. The data interaction between the database server and various subsystems is too frequently, which easily becomes a bottleneck of the database when the amount of data is large.
3. A large capacity device is not supported. When the existing structure of the commercial video surveillance system needs large capacity PU accessing, media forwarding, client accessing and recording storage, the services may be centralized in the RGM module of the system to be processed, which can cause a large pressure to the system, often result in response delay, and thus make the system collapse.
4. The scalability of the system is poor. The system hardware platform, database and system software does not have good scalability, and the system can not be expanded and adjusted and the operational capacity and performance of the system can not be optimized and improved under the conditions of guaranteeing the normal operation of services in the existing network.
5. The expansibility of the platform is poor. When the platform needs to be expanded, the architecture of the platform should be adjusted, which makes the platform expansion extremely difficult.

For the above five drawbacks, the industry often intends to solve the drawbacks using the scheme of distributed nodes. The scheme of distributed nodes requires that each serving node of the VSS video monitoring service must maintain data of this node. However, there will be a variety of conditions with data changing, such as:
a) new devices are introduced in the service center platform or configuration information of devices changes;
b) the information of the PU is directly modified;
c) the Client Unit (CU) modifies the data stored in the nodes;
d) the abnormality, except for the condition of the database transaction rollback, occurs in the system operation.

When the above a plurality of conditions occurs, and if there is not a synchronization mechanism provided for ensuring the consistency of data of various VSS serving nodes, the information of various nodes will be inconsistent with the latest data of the database. When this condition occurs, the data may conflict when new devices access the system; the monitoring cannot be operates normally because of the inconsistency between the state information of the PU and the data of the database; and device authorities stored in each of the nodes conflict, which makes the users access different nodes and the acquired device authority information shows differently. When these conditions occur, the existing system can only restart the node devices to re-acquire data so as to maintain consistency. However, frequently restarting the devices will make the services interruption, which is unacceptable for the users. Therefore, taking a synchronization mechanism to ensure the consistency of data of various nodes is the problem that should be solved when using a distributed node structure.

### Summary of the Invention

The main object of the present invention is to provide a distributed node video surveillance system and a management method thereof with respect to the drawbacks of the recently popular video surveillance system, and to design a new the video surveillance system with a distributed node structure and a management method for maintaining data consistency of nodes so as to construct a video surveillance system which is suitable for wide applications.

The present invention discloses a distributed node video surveillance system, which comprises: a plurality of Video Surveillance System (VSS) serving nodes, a service center management platform, a plurality of Pre Units (PUs) and a plurality of Client Units (CUs); wherein
the service center management platform is configured to manage the plurality of VSS serving nodes;
each of the VSS serving nodes connects a respective PU and a respective CU, and is configured to provide data for the respective PU and the respective CU;
the PU is configured to: collect video monitoring information, and directly access the VSS serving to which it belongs to acquire data;
the CU is configured to: display the video monitoring information, and directly access the VSS serving node to which it belongs to acquire data,
wherein data in the plurality of VSS serving nodes keep synchronous with the data in the service center management platform;
wherein communication between the CU and the PU of the VSS serving node is implemented by:
the CU sending communication request information to a Register Manager (RGM) module of the VSS serving node to which the CU belongs;
the RGM module searching a PU in a memory database first, and returning a response message to the CU if the PU is found, or sending a request message to a service center management platform if the PU is not found;
the service center management platform sending request information to the VSS serving node to which the PU registers;
the VSS serving node to which the PU registers receiving the request message and forwarding the request message to the PU, and then receiving the response message returned by the PU and forwarding the response message to the RGM module; and
the RGM module returning the received response message to the CU.

In the system of the present invention, the VSS serving node includes the Register Manager (RGM) module, a Content Delivery Network (CDN) management module and a Streaming Server (SS); wherein,
the RGM module is configured to: perform authentication, keep-alive, pan, tilt and lens control, configuration, recording settings and splitting, stacking and queuing a recording task through service signaling, and establish a Transmission Control Protocol (TCP) long link with the CU and the PU; and
the CDN management module is configured to control the SS to forward the data through the RGM module.

In the system of the present invention, the service center management platform includes a Monitor Manage System (MMS), a Content Manager System (CMS) and a Media Distributor Platform (MDP); wherein
the MMS is configured to: open an account for the CU and the PU and perform authority management on the CU and the PU, and perform basic operations and maintenances on the service center management platform;
the CMS is configured to manage data and the VSS serving nodes; and
the MDP is configured to manage the CDN management module.

In the system of the present invention, the RGM module includes a memory database, and the memory database is configured to store real-time dynamic data of the CU and the PU of the VSS serving node to which the RGM module belongs;
the CMS is configured to store static data of all the CUs and PUs in the video surveillance system;
the RGM module is further configured to synchronize static data of the VSS serving node to which the RGM module belongs from the CMS when being restarted.

In the system of the present invention,
the CMS is further configured to provide register information of the CU and the PU registered at first time;
the RGM module is further configured to receive the register information returned from the CMS when the CU and the PU of the VSS serving node to which the RGM module belongs register in the CMS at the first time.

In the system of the present invention, the CU includes one or any combinations of a Monitor Center (MOC), a TV wall, a WEB plug-in, a mobile phone, and a set-top box.

In the system of the present invention, the PU includes one or any combinations of an Internet Protocol Camera (IPC), a Digital Video Server (DVS) and a Digital Video Recorder (DVR).

In the system of the present invention, when the data in the plurality of VSS serving nodes keep synchronous with the data in the service center management platform,
the MMS is further configured to send a data synchronization notification to the CMS; and
the CMS is further configured to:
acquire the data that require changing from the database according to the received data synchronization notification;
find the VSS serving node that should be synchronized through node routing;
send the data synchronization notification to a Node Register Manager (RGM-N) module that should change data; and
receive a data synchronization completion notification returned by the RGM-N module after modifying the memory database.

In the system of the present invention, when the data in the plurality of VSS serving nodes keep synchronous with the data in the service center management platform,
the PU is further configured to change the data of the memory database of the VSS serving node to which the PU belongs; and
the CMS is further configured to:
receive data synchronization information sent by a Node Register Manager (RGM-N) module;
change the database according to the data synchronization information; and
return data synchronization completion acknowledgement information to the RGM-N module.

The present invention further discloses a method for managing a distributed node video surveillance system, and the method comprises:
a Client Unit (CU) sending communication request information to a Register Manager (RGM) module of a Video Surveillance System (VSS) serving node to which the CU belongs;
the RGM module searching a Pre Unit (PU) in a memory database first, and returning a response message to the CU if the PU is found, or sending a request message to a service center management platform if the PU is not found;
the service center management platform sending request information to the VSS serving node to which the PU registers;
the VSS serving node to which the PU registers receiving the request message and forwarding the request message to the PU, and then receiving the response message returned by the PU and forwarding the response message to the RGM module; and
the RGM module returning the received response message to the CU,
so as to implement communication between the CU and the PU of the VSS serving nodes;
the method further comprising: data in a plurality of the VSS serving nodes keeping synchronous with data in a Data Base (DB) of the service center management platform.

In the method of the present invention, the step of the data in the plurality of VSS serving nodes keeping synchronous with the data in Data Base (DB) in the service center management platform comprises:
a Monitor Manage System (MMS) of the service center management platform sending a data synchronization notification to a Content Manager System (CMS) when the data is updated;
the CMS acquiring the data that require changing from the DB, finding the VSS serving node that should be synchronized through node routing, and then sending data synchronization information to a Node Register Manager (RGM-N) module that should change data; and
the RGM-N module modifying the memory database according to the received data synchronization information.

In the method of the present invention, the step of the data in the plurality of VSS serving nodes keeping synchronous with the data in Data Base (DB) of the service center management platform comprises:
the PU sending a change notification to the RGM module when changing the data of the memory database of the VSS serving node to which the PU belongs;
the RGM module sending data synchronization information to the CMS of the service center management platform; and
the CMS modifying the DB according to the received data synchronization information.

Comparing with the existing video surveillance system node structure and the management method thereof, the distributed node video surveillance system and management method thereof disclosed by the present invention has the following advantages.
1. The CU and the PU directly access each of nodes to acquire data, which reduces the accesses to the database and solves the bottleneck problem of database access.
2. Synchronization mechanisms are used to ensure the consistency of data stored by a plurality of VSS nodes, which solves the problem that the data are often asynchronous due to distributed nodes, and thus the service processing can be distributed to various VSS nodes.
3. Functions of various subsystems are re-combined, which will not make a portion of the subsystems react slowly and thus become a bottleneck of the whole video surveillance system due to the concurrence of large capacity data.
4. The platform has a strong capability of capacity expansion. When the platform capacity requires expanding, it only needs to increase devices such as the server and so on without changing the platform architecture.

### Brief Description of Drawings

FIG. 1 is a structural schematic diagram of the single node video surveillance system in the prior art;
FIGs. 2 and 3 are structural diagrams of the distributed node video surveillance system according to the present invention;
FIG. 4 is a flowchart of the method of communication between a client unit and a pre unit according to the present invention;
FIG. 5 is a flowchart of the method for ensuring consistency of data among various distributed nodes in a passive mode; and
FIG. 6 is a flowchart of the method for ensuring consistency of data among various distributed nodes in an active mode.

### Preferred Embodiments of the Present Invention

The present invention is described in detail in combination with the accompanying drawings and embodiments hereinafter.

The present invention provides a method for ensuring consistency of data of various nodes to improve a distributed node video surveillance system, which performs structural optimization and reorganization mainly based on the structure utilized by the existing video surveillance system. The present invention provides a new distributed node structure and two synchronization mechanisms, and the synchronization mechanisms solve the problem of consistency of data generated by the distributed structure. The present invention can well solve a plurality of drawbacks of the existing video surveillance system.

One embodiment of the present invention provides a video surveillance system 100 which uses a distributed node structure, and a management method for maintaining consistency of data of nodes. As shown in FIG. 2, the composition parts of the video surveillance system comprise: a service center management platform 101, a plurality of VSS serving nodes 102, a Client Unit (CU) 103 and a Pre Unit (PU) 104. The service center management platform 101 manages the plurality of VSS serving nodes, and each serving node connects the respective CU and respective PU.

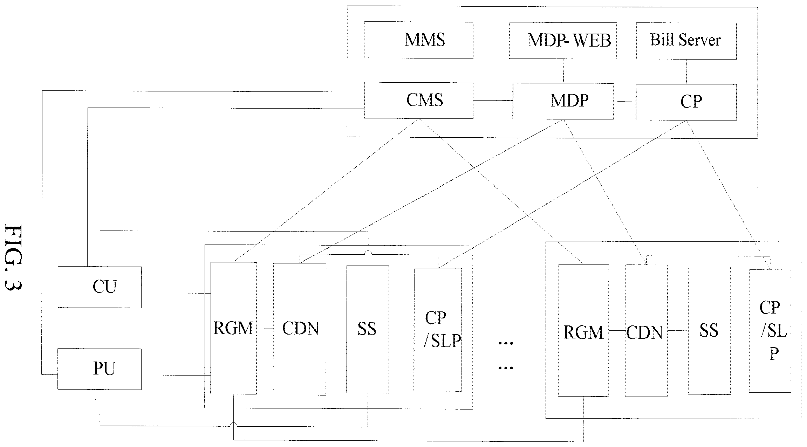

As shown in FIG. 3, in different embodiments, the present invention related service center management platform 101 may comprises a Monitor Manage System (MMS), a Content Manager System (CMS), a Media Distributor Platform (MDP), a MDP website (MDP-WEB), an original bill Content Provider (CP), and a Bill Server.

Further, the CMS does not provide the real-time service, and instead, the CMS is only used as a data management and VSS node management unit. When the CU and the PU register at the first time, register information can be acquired through the CMS and then be returned to the VSS serving node to which the CU and PU belong.

The MMS provides to open an account and manage authorities of the CU and the PU, and provides basic operations and maintenances of the service center management platform 101.

The MDP is no longer used as a serving unit of recording management and global redirection, and only plays a role of managing the CDN instead of managing functions of recording and global redirection in the video surveillance system.

As shown in FIG. 3, in different embodiments, the VSS serving node to which the present invention relates comprises a Register Manager (RGM) module, a Content Delivery Networks (CDN) module, a Streaming Server (SS), and an original bill Content Provider (CP).

Further, the RGM module is used as the core of the whole service signaling system, and the CU and the PU both establish a Transmission Control Protocol (TCP) long link with the RGM. All the service signaling is implemented through the RGM, including service signaling such as authentication, keep-alive, pan tilt and lens control, configuration, and recording settings etc.. The CU and the PU are respectively classified to a certain VSS serving node. In the subsystem of the RGM module, a memory database is used to maintain data. The RGM module stores real-time dynamic data concerning the CU and the PU, and the CMS stores static data of all the CUs and the PUs. When the RGM module is restarted, the static data are synchronized from the CMS.

CDN module is used as the control service layer of the SS, which no longer directly provides services for the outside, and instead, provides services for the outside through the RGM module interface. There are mainly two interfaces of the CDN module and the RGM module, that is, one is a serving interface, and the other is a recording interface. The splitting, stacking and queuing of recording tasks originally processed by CDN module are all implemented by RGM module instead of CDN module. The CDN module is only used to forward data and schedule the SS services.

In different embodiments, the CU to which the present invention relates can comprise one or any combinations of the Monitor Center (MOC), the TV wall, the WEB plug-in, the mobile phone and the set-top box.

In different embodiments, the PU to which the present invention relates can comprise one or any combinations of the Internet Protocol Camera (IPC), the Digital Video Server (DVS) and the Digital Video Recorder (DVR).

Further, the most important for using such a distributed nodes structure is to ensure consistency of data of various nodes. The synchronization of data of various nodes can be well ensured by using two mechanisms of the present invention, i.e., active synchronization and passive synchronization, to coordinate with this distributed nodes structure.

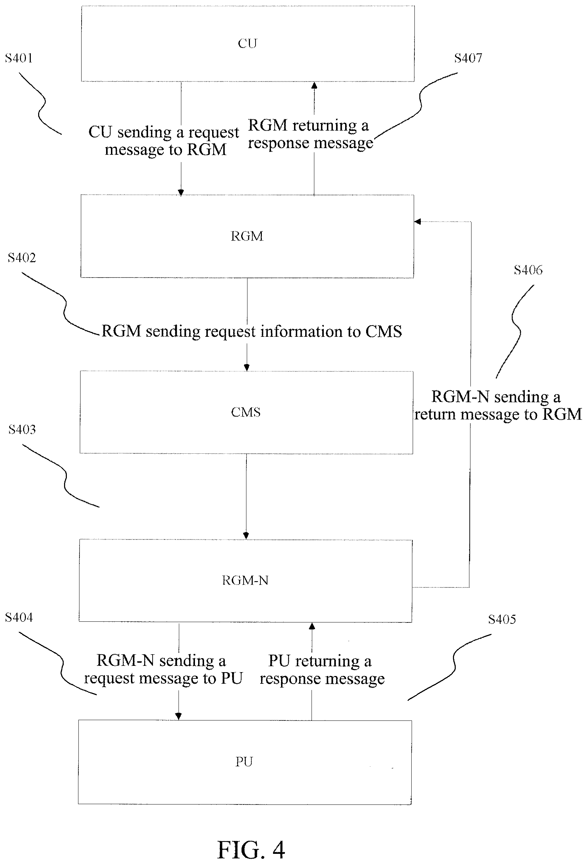

As shown in FIG. 4, the flow of the communication between the CU and the PU comprises following steps.

Step S401: the CU sends a request message to the RGM module subsystem.

Step S402: the RGM module subsystem will send a request to the CMS if the RGM module cannot find the PU with which the CU requests for communicating according to data in the memory.

Step S403: the CMS sends request information to the Node Register Manager (RGM-N) module of the node (assumed to be the node VSSn) to which the PU registers. The RGM-N module here is different from the RGM module in Step S402. The RGM-N module belongs to node VSSn, whereas the RGM module in Step S402 belongs to node VSS1. The CMS no longer provides real-time services, and is only used as a data management and VSS node management unit. The RGM is the core of the whole service signaling system.

Step S404: the RGM-N module sends a request message of the RGM-N module to the PU after receiving the request information of the CMS.

Step S405: the PU sends a return message to the RGM-N module after receiving the request message of the RGM-N module.

Step S406: the RGM-N module sends the return information to the RGM module after receiving the return message of the PU.

Step S407: the RGM module returns a message to the CU.

In the example of multiple nodes, since distributed nodes are used to share the pressure of the system to enhance the performance of the system, a corporative management method needs to be provided to solve the problem of consistency of data between the plurality of nodes and the database server in the service center management platform.

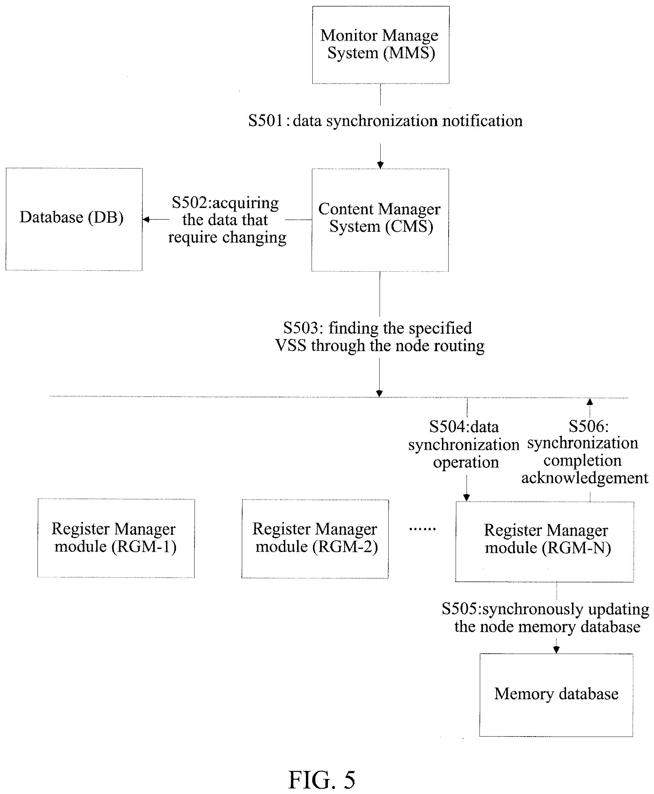

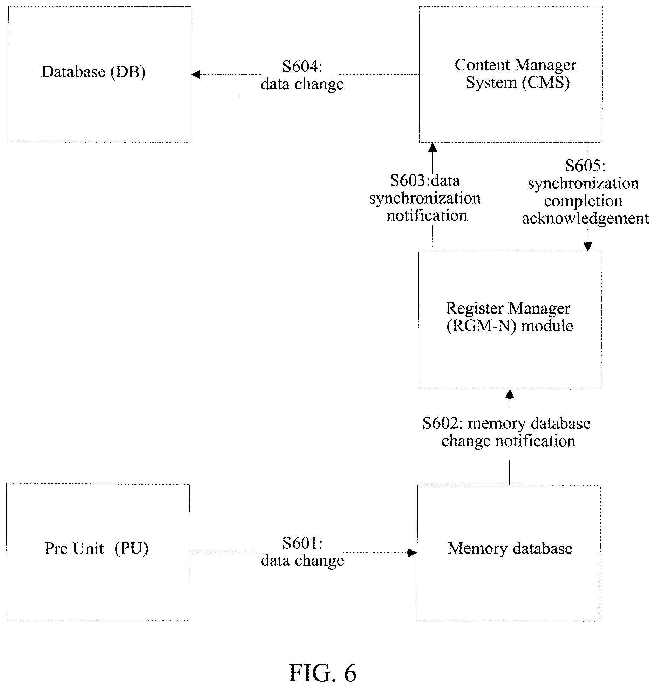

The present invention utilizes two mechanisms to ensure consistency of data among multiple nodes. FIG. 5 shows a flowchart of the method for ensuring consistency of data among various nodes in a passive mode. FIG. 6 shows a flowchart of the method for ensuring consistency of data among various nodes in an active mode.
a) The passive mode mainly is that a data synchronization notification is sent to each VSS serving node through the CMS, and each VSS serving node receives the information passively and modifies the memory database stored in each node. With reference to FIG. 5, the method comprises following steps.
   Step S501: a MMS sends a data synchronization notification to a CMS;
   Step S502: the CMS acquires data that require changing from the Database (DB) according to the synchronization notification.
   Step S503: the CMS finds the VSS serving nodes that should to be synchronized through the node routing, that is, finds the RGM-N module that should change data.
   Step S504: the CMS sends a data synchronization notification to the RGM-N module that should change data.
   Step S505: the RGM-N module modifies the memory database according to the data synchronization information.
   Step S506: the RGM-N module sends a data synchronization completion notification to the CMS.
b) The active mode mainly is that: each distributed VSS serving node actively sends the data change notification to the CMS to be synchronized to the Database (DB). With reference to FIG. 6, the method comprises following steps.
   Step S601: the PU changes data in a memory database of the serving node to which the PU belongs.
   Step S602: the RGM-N module receives the memory database data change notification.
   Step S603: the RGM-N module sends data synchronization information to the CMS.
   Step S604: the CMS modifies the DB according to the data synchronization information.
   Step S605: the CMS sends data synchronization completion acknowledgement information to the RGM-N module.

The data of each node are maintained through the use of memory database or other storage means such as documents and sub-database etc. at each the video surveillance serving node (VSS). The problem that data require synchronizing to maintain consistency due to the use of the distributed node structure can be well solved using the cooperative management method in both active and passive modes proposed in the present invention.

The present invention provides a new method and a system for managing the distributed node video surveillance, which can support large capacity PU accessing, media forwarding, client accessing and recording storage, ensure a long-term stable operation in the case of the large capacity, implement large capacity data processing in real-time, and endure a larger scale of concurrent user access and session connections.

With the present invention, the system hardware platform, database and system software can have good scalability and can expand and adjust the system and optimize and improve operational capacity and performance of the system under the conditions of guaranteeing the normal operation of services in the existing network. When the platform capacity requires expanding, it only needs to increase devices such as the server and so on without changing the platform architecture.

Obviously, the present invention may further have a plurality of other examples. Those skilled in the art can make various corresponding modifications and variations to the present invention without departing from the protection scope of the appended claims of the present invention.

### Industrial Applicability

The method and the system for managing the distributed node video surveillance proposed in the present invention can support large capacity PU accessing, media forwarding, client accessing and recording storage, ensure a long-term stable operation in the case of the large capacity, implement large capacity data processing in real-time, and endure a larger scale of concurrent user access and session connections.

With the present invention, the system hardware platform, database and system software can have good scalability and can expand and adjust the system and optimize and improve operational capacity and performance of the system under the conditions of guaranteeing the normal operation of services in the existing network. When the platform capacity requires expanding, it only needs to increase devices such as the server and so on without changing the platform architecture.

## Claims

1. A distributed node video surveillance system (100) comprising: a plurality of Video Surveillance System (VSS) serving nodes (102), a service center management platform, a plurality of Pre Units (PUs) (104) and a Client Units (CUs) (103); wherein
the service center management platform is configured to manage the plurality of VSS serving nodes;
each of the VSS serving nodes connects a respective PU and a respective CU, and is configured to provide data for the respective PU and the respective CU;
the PU is configured to: collect video monitoring information, and directly access the VSS serving node to which it belongs to acquire data;
the CU is configured to: display the video monitoring information, and directly access the VSS serving node to which it belongs to acquire data,
wherein data in the plurality of VSS serving nodes keep synchronous with the data in the service center management platform;
wherein communication between the CU and the PU of the VSS serving node is implemented by:
the CU sending communication request information to a Register Manager (RGM) module of the VSS serving node to which the CU belongs;
the RGM module searching a PU in a memory database first, and returning a response message to the CU if the PU is found, or sending a request message to a service center management platform if the PU is not found;
the service center management platform sending request information to the VSS serving node to which the PU registers;
the VSS serving node to which the PU registers receiving the request message and forwarding the request message to the PU, and then receiving the response message returned by the PU and forwarding the response message to the RGM module; and
the RGM module returning the received response message to the CU.

2. The system according to claim 1, wherein the VSS serving node (102) includes the Register Manager (RGM) module, a Content Delivery Network (CDN) management module and a Streaming Server (SS); wherein,
the RGM module is configured to: perform authentication, keep-alive, pan, tilt and lens control, configuration, recording settings and splitting, stacking and queuing a recording task through service signaling, and establish a Transmission Control Protocol (TCP) long link with the CU (103) and the PU (104); and
the CDN management module is configured to control the SS to forward the data through the RGM module.

3. The system according to claim 1, wherein the service center management platform includes a Monitor Manage System (MMS), a Content Manager System (CMS) and a Media Distributor Platform (MDP); wherein
the MMS is configured to: open an account for the CU (103) and the PU (104) and perform authority management on the CU and the PU, and perform basic operations and maintenances on the service center management platform;
the CMS is configured to manage data and the VSS serving nodes (102); and
the MDP is configured to manage the CDN management module.

4. The system according to claim 3, wherein
the RGM module includes a memory database, and the memory database is configured to store real-time dynamic data of the CU (103) and the PU (104) of the VSS serving node to which the RGM module belongs;
the CMS is configured to store static data of all the CUs and PUs in the video surveillance system;
the RGM module is further configured to synchronize static data of the VSS serving node to which the RGM module belongs from the CMS when being restarted.

5. The system according to claim 4, wherein
the CMS is further configured to provide register information of the CU (103) and the PU (104) registered at first time;
the RGM module is further configured to receive the register information returned from the CMS when the CU and the PU of the VSS serving node to which the RGM module belongs register in the CMS at the first time.

6. The system according to claim 5, wherein the CU (103) includes one or any combinations of a Monitor Center (MOC), a TV wall, a WEB plug-in, a mobile phone, and a set-top box.

7. The system according to claim 6, wherein the PU (104) includes one or any combinations of an Internet Protocol Camera (IPC), a Digital Video Server (DVS) and a Digital Video Recorder (DVR).

8. The system according to claim 7, wherein when the data in the plurality of VSS serving nodes (102) keep synchronous with the data in the service center management platform,
the MMS is further configured to send a data synchronization notification to the CMS; and the CMS is further configured to:
acquire the data that require changing from the database according to the received data synchronization notification;
find the VSS serving node that should be synchronized through node routing;
send the data synchronization notification to a Node Register Manager (RGM-N) module that should change data; and
receive a data synchronization completion notification returned by the RGM-N module after modifying the memory database.

9. The system according to claim 7, wherein when the data in the plurality of VSS serving nodes (102) keep synchronous with the data in the service center management platform,
the PU (104) is further configured to change the data of the memory database of the VSS serving node to which the PU belongs; and
the CMS is further configured to:
receive data synchronization information sent by a Node Register Manager (RGM-N) module;
change the database according to the data synchronization information; and
return data synchronization completion acknowledgement information to the RGM-N module.

10. A method for managing a distributed node video surveillance system (100) comprising:
a Client Unit (CU) (103) sending communication request information to a Register Manager (RGM) module of a Video Surveillance System (VSS) serving node to which the CU belongs;
the RGM module searching a Pre Unit (PU) (104) in a memory database first, and returning a response message to the CU if the PU is found, or sending a request message to a service center management platform if the PU is not found;
the service center management platform sending request information to the VSS serving node to which the PU registers;
the VSS serving node (102) to which the PU registers receiving the request message and forwarding the request message to the PU, and then receiving the response message returned by the PU and forwarding the response message to the RGM module; and
the RGM module returning the received response message to the CU,
so as to implement communication between the CU and the PU of the VSS serving nodes;
the method further comprising: data in a plurality of the VSS serving nodes keeping synchronous with data in a Data Base (DB) of the service center management platform.

11. The method according to claim 10, wherein the step of the data in the plurality of VSS serving nodes (102) keeping synchronous with the data in Data Base (DB) in the service center management platform comprises:
a Monitor Manage System (MMS) of the service center management platform sending a data synchronization notification to a Content Manager System (CMS) when the data is updated;
the CMS acquiring the data that require changing from the DB, finding the VSS serving node that should be synchronized through node routing, and then sending data synchronization information to a Node Register Manager (RGM-N) module that should change data; and
the RGM-N module modifying the memory database according to the received data synchronization information.

12. The method according to claim 10, wherein the step of the data in the plurality of VSS serving nodes (102) keeping synchronous with the data in Data Base (DB) of the service center management platform comprises:
the PU (104) sending a change notification to the RGM module when changing the data of the memory database of the VSS serving node to which the PU belongs;
the RGM module sending data synchronization information to the CMS of the service center management platform; and
the CMS modifying the DB according to the received data synchronization information.

## Patentansprüche

1. Videoüberwachungssystem (100) mit verteilten Knoten, das Folgendes umfasst:
mehrere Videoüberwachungssystem(Video Surveillance System - VSS)-Abnehmerknoten (102), eine Dienstleistungszentrum-Verwaltungsplattform, mehrere Voreinheiten (Pre Units-PU) (104) und mehrere Client-Einheiten (Client Units - CU) (103); wobei
die Dienstleistungszentrum-Verwaltungsplattform dafür konfiguriert ist, die mehreren VSS-Abnehmerknoten zu verwalten;
jeder der VSS-Abnehmerknoten eine jeweilige PU und eine jeweilige CU verbindet und dafür konfiguriert ist, Daten für die jeweilige PU und die jeweilige CU bereitzustellen;
die PU dafür konfiguriert ist, Videoüberwachungsinformationen zu sammeln und unmittelbar auf den VSS-Abnehmerknoten, zu dem sie gehört, zuzugreifen, um Daten zu erlangen;
die CU dafür konfiguriert ist, die Videoüberwachungsinformationen anzuzeigen und unmittelbar auf den VSS-Abnehmerknoten, zu dem sie gehört, zuzugreifen, um Daten zu erlangen,
wobei Daten in den mehreren VSS-Abnehmerknoten synchron mit den Daten in der Dienstleistungszentrum-Verwaltungsplattform bleiben;
wobei die Kommunikation zwischen der CU und der PU des VSS-Abnehmerknotens dadurch umgesetzt wird, dass
die CU Kommunikationsanforderungsinformationen an ein Registerverwaltungs(Register Manager - RGM)-Modul des VSS-Abnehmerknotens, zu dem die CU gehört, sendet;
das RGM-Modul zuerst eine PU in einer Speicherdatenbank sucht und eine Antwortnachricht an die CU sendet, falls die PU gefunden wird, oder eine Anforderungsnachricht an eine Dienstleistungszentrum-Verwaltungspattform sendet, falls die PU nicht gefunden wird;
die Dienstleistungszentrum-Verwaltungsplattform Anforderungsinformationen an den VSS-Abnehmerknoten, bei dem sich die PU registriert, sendet;
der VSS-Abnehmerknoten, bei dem sich die PU registriert, die Anforderungsnachricht empfängt und die Anforderungsnachricht an die PU weiterleitet und dann die durch die PU zurückgegebene Antwortnachricht empfängt und die Antwortnachricht an das RGM-Modul weiterleitet; und
das RGM-Modul die empfangene Antwortnachricht an die CU zurückgibt.

2. System nach Anspruch 1, wobei der VSS-Abnehmerknoten (102) das Registerverwaltungs(RGM)-Modul, ein Inhaltsauslieferungsnetz(Content Delivery Network - CDN)-Verwaltungsmodul und einen Streaming-Server (SS) einschließt; wobei
das RGM-Modul dafür konfiguriert ist, Authentifizierung, Aufrechterhaltung, Schwenk, Neigungs- und Objektivsteuerung, Konfiguration, Aufnahmeeinstellungen und -teilung, Stapeln und Warteschlangenbildung einer Aufnahmeaufgabe durch Dienstsignalisierung und Herstellen einer langen Transmission-Control-Protocol(TCP)-Verknüpfung mit der CU (103) und der PU (104) durchzuführen; und
das CDN-Verwaltungsmodul dafür konfiguriert ist, den SS zu steuern, um die Daten durch das RGM-Modul weiterzuleiten.

3. System nach Anspruch 1, wobei die Dienstleistungszentrum-Verwaltungsplattform ein Überwachungsverwaltungssystem (Monitor Manage System - MMS), ein Inhaltsverwaltungssystem (Content Management System - CMS) und eine Medienverteilungsplattform (Media Distributor Platform - MDP) einschließt; wobei
das MMS dafür konfiguriert ist, ein Konto für die CU (103) und die PU (104) zu eröffnen und Autoritätsverwaltung an der CU und der PU durchzuführen und grundlegende Operationen und Wartungen an der Dienstleistungszentrum-Verwaltungsplattform durchzuführen;
das CMS dafür konfiguriert ist, Daten und die VSS-Abnehmerknoten (102) zu verwalten; und
die MDP dafür konfiguriert ist, das CDN-Verwaltungsmodul zu verwalten.

4. System nach Anspruch 3, wobei
das RGM-Modul eine Speicherdatenbank einschließt und die Speicherdatenbank dafür konfiguriert ist, dynamische Echtzeitdaten der CU (103) und der PU (104) des VSS-Abnehmerknotens, zu dem das RGM-Modul gehört, zu speichern;
das CMS dafür konfiguriert ist, statische Daten aller CU und PU in dem Videoüberwachungssystem zu speichern;
das RGM-Modul ferner dafür konfiguriert ist, statische Daten des VSS-Abnehmerknotens, zu dem das RGM-Modul gehört, zu synchronisieren, wenn es neu gestartet wird.

5. System nach Anspruch 4, wobei
das CMS ferner dafür konfiguriert ist, Registerinformationen der CU (103) und der PU (104), die zum ersten Mal registriert werden, bereitzustellen;
das RGM-Modul ferner dafür konfiguriert ist, die von dem CMS zurückgegebenen Registerinformationen zu empfangen, wenn sich die CU und die PU des VSS-Abnehmerknotens, zu dem das RGM-Modul gehört, zum ersten Mal in dem CMS registrieren.

6. System nach Anspruch 5, wobei die CU (103) eines oder beliebige Kombinationen von einem Überwachungszentrum (Monitor Center - MOC), einer TV-Wand, einem WEB-Einsteckteil, einem Mobiltelefon und einer Set-Top-Box einschließt.

7. System nach Anspruch 6, wobei die PU (104) eines oder beliebige Kombinationen einer Internet-Protocol-Kamera (Internet Protocol Camera - IPC), eines digitalen Videoservers (DVS) und eines digitalen Videorecorders (DVR) einschließt.

8. System nach Anspruch 7, wobei, wenn die Daten in den mehreren VSS-Abnehmerknoten (102) synchron mit den Daten in der Dienstleistungszentrum-Verwaltungsplattform bleiben,
das MMS ferner dafür konfiguriert ist, eine Datensynchronisationsbenachrichtigung an das CMS zu senden; und
das CMS ferner dafür konfiguriert ist,
die Daten, die eine Änderung erfordern, von der Datenbank entsprechend der empfangenen Datensynchronisationsbenachrichtigung zu erlangen;
den VSS-Abnehmerknoten, der synchronisiert werden sollte, durch Knotenrouting zu finden;
die Datensynchronisationsbenachrichtigung an ein Knotenregisterverwaltungs(Node Register Manager - RGM-N)-Modul, das Daten ändern sollte, zu senden; und
eine durch das RGM-N-Modul zurückgegebene Datensynchronisation-Vollzugsbenachrichtigung nach dem Modifizieren der Speicherdatenbank zu empfangen.

9. System nach Anspruch 7, wobei, wenn die Daten in den mehreren VSS-Abnehmerknoten (102) synchron mit den Daten in der Dienstleistungszentrum-Verwaltungsplattform bleiben
die PU (104) ferner dafür konfiguriert ist, die Daten der Speicherdatenbank des VSS-Abnehmerknotens, zu dem die PU gehört, zu ändern; und
das CMS ferner dafür konfiguriert ist,
durch ein Knotenregisterverwaltungs (RGM-N)-Modul gesendete Datensynchronisationsinformationen zu empfangen;
die Datenbank entsprechend den Datensynchronisationsinformationen zu ändern; und
Datensynchronisation-Vollzugsbestätigungsinformationen an das RGM-N-Modul zurückzugeben.

10. Verfahren zum Verwalten eines Videoüberwachungssystems (100) mit verteilten Knoten, das Folgendes umfasst:
dass eine Client-Einheit (CU) (103), die Kommunikationsanforderungsinformationen an ein Registerverwaltungs(RGM)-Modul eines Videoüberwachungs (VSS)-Abnehmerknotens, zu dem die CU gehört, sendet;
dass das RGM-Modul zuerst eine Voreinheit (PU) (104) in einer Speicherdatenbank sucht und eine Antwortnachricht an die CU sendet, falls die PU gefunden wird, oder eine Anforderungsnachricht an eine Dienstleistungszentrum-Verwaltungspattform sendet, falls die PU nicht gefunden wird;
dass die Dienstleistungszentrum-Verwaltungsplattform Anforderungsinformationen an den VSS-Abnehmerknoten, bei dem sich die PU registriert, sendet;
dass der VSS-Abnehmerknoten (102), bei dem sich die PU registriert, die Anforderungsnachricht empfängt und die Anforderungsnachricht an die PU weiterleitet und dann die durch die PU zurückgegebene Antwortnachricht empfängt und die Antwortnachricht an das RGM-Modul weiterleitet; und
das RGM-Modul die empfangene Antwortnachricht an die CU zurückgibt,
um so die Kommunikation zwischen der CU und der PU der VSS-Abnehmerknoten umzusetzen;
wobei das Verfahren ferner Folgendes umfasst: dass Daten in den mehreren VSS-Abnehmerknoten synchron mit Daten in einer Datenbank (DB) der Dienstleistungszentrum-Verwaltungsplattform bleiben.

11. Verfahren nach Anspruch 10, wobei der Schritt, dass die Daten in den mehreren VSS-Abnehmerknoten (102) synchron mit den Daten in einer Datenbank (DB) in der Dienstleistungszentrum-Verwaltungsplattform bleiben, Folgendes umfasst:
dass ein Überwachungsverwaltungssystem (MMS) der Dienstleistungszentrum-Verwaltungsplattform eine Datensynchronisationsbenachrichtigung an ein Inhaltsverwaltungssystem (CMS) sendet, wenn die Daten aktualisiert werden;
dass das CMS die Daten, die eine Änderung erfordern, von der DB erlangt, den VSS-Abnehmerknoten, der synchronisiert werden sollte, durch Knotenrouting findet und dann eine Datensynchronisationsinformationen an ein Knotenregisterverwaltungs(RGM-N)-Modul, das Daten ändern sollte, sendet; und
dass das RGM-N-Modul die Speicherdatenbank entsprechend den Datensynchronisationsinformationen modifiziert.

12. Verfahren nach Anspruch 10, wobei der Schritt, dass die Daten in den mehreren VSS-Abnehmerknoten (102) synchron mit den Daten in einer Datenbank (DB) der Dienstleistungszentrum-Verwaltungsplattform bleiben, Folgendes umfasst:
dass die PU eine Änderungsbenachrichtigung an das RGM-Modul sendet, wenn die Daten der Speicherdatenbank des VSS-Abnehmerknoten, zu dem die PU gehört, geändert werden;
dass das RGM-Modul Datensynchronisationsinformationen an das CMS der Dienstleistungszentrum-Verwaltungsplattform sendet; und
dass das CMS die DB entsprechend den empfangenen Datensynchronisationsinformationen ändert.

## Revendications

1. Système de vidéosurveillance à noeuds répartis (100) comprenant : une pluralité de noeuds (102) desservant un système de vidéosurveillance (VSS), une plate-forme de gestion de centre de services, une pluralité de pré-unités (PU) (104) et d'unités clientes (CU) (103) ; dans lequel
la plate-forme de gestion de centre de services est configurée pour gérer la pluralité de noeuds desservant un VSS ;
chacun des noeuds desservant un VSS connecte une PU respective et une CU respective, et est configuré pour fournir des données pour la PU respective et la CU respective ;
la PU est configurée pour : collecter des informations de vidéosurveillance, et accéder directement au noeud desservant un VSS auquel elle appartient pour acquérir des données ;
la CU est configurée pour : afficher les informations de vidéosurveillance, et accéder directement au noeud desservant un VSS auquel elle appartient pour acquérir des données ;
dans lequel les données dans la pluralité de noeuds desservant un VSS restent synchrones avec les données dans la plate-forme de gestion de centre de services ;
dans lequel la communication entre la CU et le PU du noeud desservant un VSS est mise en oeuvre par :
la CU envoyant des informations de demande de communication à un module de gestionnaire de registre (RGM) du noeud desservant un VSS auquel la CU appartient ;
le module RGM recherchant d'abord une PU dans une base de données de mémoire, et le renvoi d'un message de réponse à la CU si la PU est trouvée, ou envoyant un message de demande à une plate-forme de gestion de centre de services si la PU n'est pas trouvée ;
la plate-forme de gestion de centre de services envoyant des informations de demande au noeud desservant un VSS dans lequel la PU s'enregistre ;
le noeud desservant un VSS dans lequel la PU s'enregistre ;
la réception du message de demande et le transfert du message de demande à la PU, et ensuite la réception du message de réponse renvoyé par la PU et le transfert du message de réponse au module RGM ; et
le module RGM renvoyant le message de réponse reçu à la CU.

2. Système selon la revendication 1, dans lequel le noeud desservant un VSS (102) comprend le module de gestionnaire de registre (RGM), un module de gestion de réseau de distribution de contenus (CDN) et un serveur de diffusion en continu (SS) ; dans lequel
le module RGM est configuré pour : réaliser une authentification, un entretien, un panoramique, une inclinaison et un contrôle d'objectif, une configuration, des paramétrages d'enregistrement et un fractionnement, un empilement et une mise en file d'attente d'une tâche d'enregistrement par l'intermédiaire d'une signalisation de service, et établir une liaison longue de protocole de contrôle de transmission (TCP) avec la CU (103) et la PU (104) ; et
le module de gestion de CDN est configuré pour commander le SS pour qu'il transfère les données par l'intermédiaire du module RGM.

3. Système selon la revendication 1, dans lequel la plate-forme de gestion de centre de services comprend un système de gestion de surveillance (MMS), un système de gestionnaire de contenus (CMS) et une plate-forme de distributeurs de médias (MDP) ; dans lequel
le MMS est configuré pour : ouvrir un compte pour la CU (103) et la PU (104) et effectuer une gestion d'autorité sur la CU et la PU, et effectuer des opérations de base et des maintenances sur la plate-forme de gestion de centre de services ;
le CMS est configuré pour gérer des données et les noeuds desservant un VSS (102) ; et
le MDP est configuré pour gérer le module de gestion de CDN.

4. Système selon la revendication 3, dans lequel
le module RGM comprend une base de données de mémoire, et la base de données de mémoire est configurée pour stocker des données dynamiques en temps réel de la CU (103) et de la PU (104) du noeud desservant un VSS auquel le module RGM appartient ;
le CMS est configuré pour stocker des données statiques de toutes les CU et les PU dans le système de vidéosurveillance ;
le module RGM est en outre configuré pour synchroniser des données statiques du noeud desservant un VSS auquel le module RGM appartient à partir du CMS lorsqu'il est redémarré.

5. Système selon la revendication 4, dans lequel
le CMS est en outre configuré pour fournir des informations de registre de la CU (103) et de la PU (104) enregistrées pour la première fois ;
le module RGM est en outre configuré pour recevoir les informations de registre renvoyées depuis le CMS lorsque la CU et la PU du noeud desservant un VSS auquel le module RGM appartient s'enregistrent dans le CMS pour la première fois.

6. Système selon la revendication 5, dans lequel la CU (103) comprend une ou n'importe quelle combinaison d'un centre de surveillance (MOC), d'une paroi TV, d'un module d'extension web, d'un téléphone mobile et d'un boîtier décodeur.

7. Système selon la revendication 6, dans lequel la PU (104) comprend une ou n'importe quelle combinaison d'une caméra à protocole Internet (IPC), d'un serveur vidéo numérique (DVS) et d'un enregistreur vidéo numérique (DVR).

8. Système selon la revendication 7, dans lequel les données dans la pluralité de noeuds desservant un VSS (102) restent synchrones avec les données dans la plate-forme de gestion de centre de services,
le MMS est en outre configuré pour envoyer une notification de synchronisation de données au CMS ; et
le CMS est en outre configuré pour :
acquérir les données qui nécessitent un changement par rapport à la base de données selon la notification de synchronisation de données reçue ;
trouver le noeud desservant un VSS qui devrait être synchronisé par l'intermédiaire d'un routage de noeuds ;
envoyer la notification de synchronisation de données à un module de gestionnaire de registre de noeuds (RGM-N) qui devrait changer des données ; et
recevoir une notification de fin de synchronisation de données renvoyée par le module RGM-N après modification de la base de données de mémoire.

9. Système selon la revendication 7, dans lequel lorsque les données dans la pluralité de noeuds desservant un VSS (102) restent synchrones avec les données dans la plate-forme de gestion de centre de services,
la PU (104) est en outre configurée pour changer les données de la base de données de mémoire du noeud desservant un VSS auquel la PU appartient ; et
le CMS est en outre configuré pour :
recevoir des informations de synchronisation de données envoyées par un module de gestionnaire de registre de noeuds (RGM-N) ;
changer la base de données selon les informations de synchronisation de données ; et
renvoyer des informations de reconnaissance de fin de synchronisation de données au module RGM-N.

10. Procédé de gestion d'un système de vidéosurveillance à noeuds répartis (100) comprenant :
une unité cliente (CU) (103) envoyant des informations de demande de communication à un module de gestionnaire de registre (RGM) d'un noeud desservant un système de vidéosurveillance (VSS) auquel la CU appartient ;
le module RGM recherchant d'abord une pré-unité (PU) (104) dans une base de données de mémoire, et renvoyant un message de réponse à la CU si la PU est trouvée, ou envoyant un message de demande à une plate-forme de gestion de centre de services si la PU n'est pas trouvée ;
la plate-forme de gestion de centre de services envoyant des informations de demande au noeud desservant un VSS dans lequel la PU s'enregistre ;
le noeud desservant un VSS (102) dans lequel la PU s'enregistre recevant le message de demande et le transfert du message de demande à la PU, et ensuite recevant le message de réponse renvoyé par la PU et transférant le message de réponse au module RGM ; et
le module RGM renvoyant le message de réponse reçu à la CU,
de manière à mettre en oeuvre une communication entre la CU et la PU des noeuds desservant un VSS ;
le procédé comprenant en outre : des données dans une pluralité de noeuds desservant un VSS restant synchrones avec des données dans une base de données (DB) de la plate-forme de gestion de centre de services.

11. Procédé selon la revendication 10, dans lequel l'étape des données dans la pluralité de noeuds desservant un VSS (102) restant synchrones avec les données dans la base de données (DB) dans la plate-forme de gestion de centre de services comprend :
un système de gestion de surveillance (MMS) de la plate-forme de gestion de centre de services envoyant une notification de synchronisation de données à un système de gestionnaire de contenus (CMS) lorsque les données sont mises à jour ;
le CMS acquérant les données qui nécessitent un changement par rapport à la DB, trouvant le noeud desservant un VSS qui devrait être synchronisé par l'intermédiaire d'un routage de noeuds, et ensuite envoyant des informations de synchronisation de données à un module de gestionnaire de registre de noeuds (RGM-N) qui devrait changer des données ; et
le module RGM-N modifiant la base de données de mémoire selon les informations de synchronisation de données reçues.

12. Procédé selon la revendication 10, dans lequel l'étape des données dans la pluralité de noeuds desservant un VSS (102) restant synchrones avec les données dans une base de données (DB) de la plate-forme de gestion de centre de services comprend :
la PU envoyant une notification de changement au module RGM lors d'un changement des données de la base de données de mémoire du noeud desservant un VSS auquel la PU appartient ;
le module RGM envoyant des informations de synchronisation de données au CMS de la plate-forme de gestion de centre de services ; et
le CMS modifiant la DB selon les informations de synchronisation de données reçues.
